# EUROPÄISCHE PATENTANMELDUNG

(11) **EP 2 022 769 A1**
(43) Veröffentlichungstag der Anmeldung: **11.02.2009**
(21) Anmeldenummer: 07015249.1
(22) Anmeldetag: 03.08.2007
(51) Int. Cl.: C04B 28/14, C04B 24/38, C08B 11/20

(54) **Alkylhydroxyalkylcellulose (AHAC) für gipsabbindende Baustoffsysteme**

(71) Anmelder: Dow Wolff Cellulosics GmbH, 29699 Bomlitz (DE)
(72) Erfinder: Brackhagen, Meinolf, Dr., 29664 Walsrode (DE); Neubauer, Jörg, Dr., 21075 Hamburg (DE); Grote, Grit, Dr., 29683 Bad Fallingbostel (DE); Schlesiger Hartwig, Dr., 29664 Walsrode (DE); Wolbers, Peter, Dr., 29664 Walsrode (DE); Grote, Carsten, Dr., 29683 Bad Fallingbostel (DE)
(74) Vertreter: Polypatent

(57) **Zusammenfassung**

Die vorliegende Erfindung betrifft eine Zusammensetzung für ein gipsabbindendes Baustoffsystem, wobei neben den üblichen Inhaltsstoffen einer Gipsmischung, eine mit einem Vernetzungsmittel behandelte Alkylhydroxyalkylcellulose (AHAC) enthalten ist sowie die Herstellung von dieser Alkylhydroxyalkylcellulosen und deren Anwendung in gipsabbindenden Baustoffsystemen, bevorzugt in gipsabbindenden Putzen und Spachtelmassen, besonders bevorzugt in Gipsmaschinenputz.

## Beschreibung

Die vorliegende Erfindung betrifft die Herstellung von Alkylhydroxyalkylcellulose (AHAC) und deren Anwendung in gipsabbindenden Baustoffsystemen, bevorzugt in gipsabbindenden Putzen und Spachtelmassen, besonders bevorzugt in Gipsmaschinenputz.

Die Stoffklasse der Celluloseether, darunter die Gruppe der binären Alkylhydroxyalkylcellulosen mit den kommerziell verwerteten Vertretern Methylhydroxyethylcellulose (MHEC) und Methylhydroxypropylcellulose (MHPC), ist seit mehreren Jahrzehnten universitäres und industrielles Betätigungsfeld und vielfach beschrieben. Eine übersichtliche Darstellung der chemischen Grundlagen und Prinzipien der Herstellung (Herstellverfahren und Verfahrensschritte) sowie eine stoffliche Zusammenstellung und Beschreibung der Eigenschaften und Anwendungsmöglichkeiten der verschiedenen Derivate gibt beispielsweise Houben-Weyl, Methoden der Organischen Chemie, Makromolekulare Stoffe, 4. Auflage, Band E 20, S. 2042 (1987). Die kommerziell verwerteten Methylhydroxypropylcellulosen bilden bei Raumtemperatur in Wasser viskose Lösungen und sind in heißem Wasser bei Temperaturen oberhalb des Flockpunktes unlöslich.

Die Herstellung von Alkylhydroxyalkylcellulosen kann wie folgt zusammengefasst werden: In einem vorgelagerten Teilschritt erfolgt die Aktivierung des cellulosischen Ausgangsmaterials, vorzugsweise mit Alkalilauge. Nachfolgend wird die gebildete Alkalicellulose mit dem entsprechenden Alkylenoxid und Methylchlorid forciert umgesetzt, wobei zweckmäßig ggf. überschüssig eingesetztes Alkali mit überstöchiometrischen Mengen Methylchlorid weitgehend neutralisiert wird. Im anschließenden Reinigungsschritt werden gebildetes Salz und sonstige Nebenprodukte abgetrennt, vorzugsweise durch Heißwasserwäsche.

Die Alkylsubstitution wird in der Celluloseether-Chemie allgemein durch den DS beschrieben. Der DS ist die mittlere Anzahl an substituierten OH-Gruppen pro Anhydroglucoseeinheit. Die Methylsubstitution wird beispielsweise als DS (Methyl) oder DS (M) angegeben.

Üblicherweise wird die Hydroxyalkylsubstitution durch den MS beschrieben. Der MS ist die mittlere Anzahl von Molen des Veretherungsreagenz, die pro Mol Anhydroglucoseeinheit etherartig gebunden sind. Die Veretherung mit dem Veretherungsreagenz Propylenoxid wird dementsprechend als MS (Hydroxypropyl) oder MS (HP) angegeben.

Der durch Heißwasserwäsche erhaltene, von Nebenprodukte gereinigte und noch wasserfeuchte Celluloseether mit einem Wassergehalt von etwa 50 Gew.-%, bezogen auf die Gesamtmasse, wird - gegebenenfalls nach weiterer Vorbehandlung (Konditionierung) - durch Trocknung und Mahlung in eine verkaufsfähige Form überführt. In den Handel gelangen die Celluloseether bevorzugt in Pulver- oder Granulatform mit einem Wassergehalt von etwa 1 bis 10 Gew.-%.

Celluloseether werden in Baustoffsystemen wie z.B. Hand- und Maschinenputzen, Spachtelmassen, Fliesenklebern, Spritzbetonmassen, Fließestrichen, Zementextrudaten und Dispersionsfarben als Verdickungs- und Wasserrückhaltemittel eingesetzt.

Die Eigenschaften dieser Baustoffsysteme, insbesondere die Konsistenz und das Abbindeverhalten können durch die Wahl des Celluloseethers stark beeinflusst werden.

Insbesondere in gipsabbindenden Baustoffsystemen, d.h. mit Wasser versetzten gipshaltigen Grundmischungen, werden oft Knollen oder Knötchen beobachtet, die im ungünstigsten Fall zu Unebenheiten und Riefen führen können und zumindest Verzögerungen durch intensive Nacharbeit zur Folge haben.

Es wurde versucht, einen Teil dieser Probleme durch Zusatzmittelkombinationen zu beheben. So offenbart die WO 99/64368 ein Additivgemisch, welches hauptsächlich aus Celluloseether und geringen Mengen einer polymerisierten Carbonsäure sowie eines Methacrylat oder Acrylat Homo- oder Interpolymer besteht. Leider ist die Herstellung dieses Additivgemisches aufwendig, erfordert zusätzliche Mischaggregate und führt nicht immer zur Reduzierung von Knollen. Darüber hinaus kann die Verwendung von wässrigen Carbonsäurelösungen zu einem pH-induzierten Kettenabbau des Celluloseethers führen.

Aufgabe der vorliegenden Erfindung ist daher die Bereitstellung einer Zusammensetzung, die beim Anrühren mit Wasser - zwecks Herstellung eines gipsabbindenden Baustoffsystems - nicht zu Verklumpungen führt und bei der auf den Zusatz von aufwändig herzustellenden Additivkombinationen, wie sie im Stand der Technik beschrieben werden, verzichtet werden kann.

Überraschenderweise wurde diese Aufgabe dadurch gelöst, dass in der erfindungsgemäßen Zusammensetzung für ein gipsabbindendes Baustoffsystem eine mit einem Vernetzungsmittel behandelte Alkylhydroxyalkylcellulose (AHAC) verwendet wird, wobei das Vernetzungsmittel der temporären Vernetzung der AHAC dient.

In einer bevorzugten Ausführungsform der Erfindung wurde die in der Zusammensetzung enthaltene Alkylhydroxyalkylcellulose (AHAC) mit 0,005 bis 1, bevorzugt 0,01 bis 0,3 und besonders bevorzugt 0,02 bis 0,2 Gew.-% des Vernetzungsmittels berechnet als wasser- und lösungsmittelfreie Substanz und bezogen auf die trockene AHAC behandelt. Dabei ist die verwendete Menge der an sich bekannten Vernetzungsmittel geringer als die nach dem Stand der Technik eingesetzte Menge bei anderen Anwendungen, z. B. bei Anwendung in Dispersionsfarben.

Bevorzugt werden folgende Alkylhydroxyalkylcellulosen (AHAC) verwendet: Methylhydroxyethylcellulose (MHEC), Ethylhydroxyethylcellulose (EHEC), Methylhydroxypropylcellulose (MHPC) sowie die ternären Mischether Methylethylhydroxyethylcellulose (MEHEC) und Methylhydroxyethylhydroxypropylcellulose (MHEHPC) oder eine Mischung dieser Celluloseether. Besonders bevorzugt wird Methylhydroxyethylcellulose (MHEC) verwendet.

Die eingesetzten Alkylhydroxyalkylcellulosen (AHAC) haben bevorzugt einen DS (Alkyl) von 0,8 bis 2,0 und besonders bevorzugt von 1,3 bis 1,8.

Der MS (Hydroxyalkyl) beträgt bevorzugt 0,1 bis 1,2, besonders bevorzugt 0,15 bis 0,8 und ganz besonders bevorzugt 0,2 bis 0,6. Unter "MS (Hydroxyalkyl)" wird im Falle ternärer Mischether der Gesamt-MS verstanden.

Die Bestimmung des DS und MS erfolgt nach der dem Fachmann bekannten Zeisel-Methode, beschrieben z.B. in P. W. Morgan, Ind. Eng. Chem. Anal. Ed. 18 (1946) 500 - 504 und R. U. Lemieux, C. B. Purves, Can. J. Res. Sect. B 25 (1947) 485 - 489.

Ein Verfahren nach dem Stand der Technik zur Herstellung behandelter Alkylhydroxyalkylcellulose (AHAC) besteht im Besprühen eines bereits getrockneten und gemahlenen Celluloseethers mit einer wässrigen Lösung eines Vernetzungsmittels in einem kontinuierlichen Hochintensivmischer und anschließender Entfernung des Wasser durch erneute Trocknung, wie es beispielsweise in der EP-B 0 868 436 beschrieben ist. Dieses Verfahren erfordert einen zusätzlichen Trocknungsschritt sowie ein spezielles Mischorgan.

Ebenfalls bekannt ist ein Verfahren, bei dem die Alkylhydroxyalkylcellulose (AHAC) in einem Suspensionsmittel aufgeschlämmt wird, ein Vernetzungsmittel zugegeben wird und sodann das Suspensionsmittel wieder abgetrennt wird. Beispiele für diese Verfahrensweise sind der US 2 879 268 zu entnehmen. Nach diesem Verfahren werden jedoch zusätzliche Verfahrensschritte eingeführt, die nur schwer in den Herstellungsprozess integriert werden können.

In einer besonderen Ausführungsform der Erfindungs wird daher ein Verfahren angewendet, welches keine zusätzliche Trocknungsstufe erfordert und gut in den bestehenden Herstellungsprozess integriert werden kann. Dieses Verfahren beinhaltet als wesentliches Merkmal die Vermischung eines von Nebenprodukten gereinigten feuchten Celluloseethers, wie er im Herstellungsprozess nach der Reinigungsstufe anfällt, mit dem Vernetzer sowie die Trocknung und Mahlung des so behandelten Celluloseethers.

Es hat sich dabei als besonders vorteilhaft erwiesen, das Vernetzungsmittel zusammen mit einer bestimmten Mindestmenge eines Lösungsmittels für den Vernetzer, bevorzugt Wasser, zuzugeben. Überraschenderweise kann dabei auf plastifizierende Zwangsvermischung in einem Kneter verzichtet werden, wie sie in der DE-OS 1 518 213 als notwendig beschrieben wird, wenn ein feuchter Celluloseether aus der Reinigungsstufe des Herstellungsprozesses eingesetzt wird.

Ein Gegenstand der vorliegenden Erfindung ist daher auch ein Verfahren zur Herstellung einer mit einem Vernetzungsmittel behandelten Alkylhydroxyalkylcellulose (AHAC) durch
a) Zugabe von 0,005 bis 1, bevorzugt 0,01 bis 0,3 und besonders bevorzugt 0,02 bis 0,2 Gew.-% eines Vernetzungsmittels, berechnet als Wasser- und lösungsmittelfreie Substanz bezogen auf die trockene AHAC, zu einer feuchten Alkylhydroxyalkylcellulose, sowie
b) anschließende Trocknung und Mahlung der so behandelten AHAC,
dadurch gekennzeichnet, dass zusammen mit dem Vernetzungsmittel in Schritt a) mindestens 3 Gew.-%, bevorzugt mindestens 5 Gew.-%, besonders bevorzugt mindestens 10 Gew.-% Wasser bezogen auf die trockene AHAC zugegeben werden.

Es werden bevorzugt höchstens 100 Gew.-%, bevorzugt höchstens 80 Gew.-%, besonders bevorzugt höchstens 50 Gew.-% Wasser zugegeben.

Zusammen mit dem Vernetzungsmittel können weitere Additive und Modifikatoren zugegeben werden, beispielsweise ein Puffersystem zur Einstellung des pH-Wertes nach der EP-B 1 316 563 oder Prozesshilfsmittel gemäß EP-A 1 445 278.

Das erfindungsgemäße Verfahren kann ohne zusätzliche Apparate oder Verfahrensschritte, wie beispielsweise einen Trocknungsschritt angewendet werden. So kann das Vernetzungsmittel und ggf. das Puffergemisch vollständig oder teilweise dem Lösungsmittel zugemischt werden, welches zur Einstellung erwünschter Eigenschaften zu einer feuchten AHAC gegeben wird. Die Einstellung des Feuchtegehaltes von Celluloseethern ist beispielsweise in der EP-B 1 127 895 beschrieben.

Bevorzugt wird eine vom Reaktionsgemisch isolierte, neutralisierte, von Nebenprodukten ausreichend gereinigte und noch feuchte Alkylhydroxyalkylcellulose als Ausgangsmaterial eingesetzt. Die erfindungsgemäß einzusetzenden feuchten Alkylhydroxyalkylcellulosen (AHAC) können beispielsweise durch Reaktion von Cellulose mit Alkylchlorid und Alkylenoxid und anschließender Reinigung mit heißem Wasser in Form eines üblicherweise wasserfeuchten Filterkuchens oder Zentrifugenrückstandes erhalten werden.

Feuchte Alkylhydroxyalkylcellulosen, wie sie in dem erfindungsgemäßen Verfahren einzusetzen sind, haben unabhängig davon, wie der Feuchtegehalt eingestellt wird, einen Gesamtfeuchteanteil von bevorzugt 30 - 70 Gew.-%, besonders bevorzugt von 40 - 60 Gew.-%, jeweils bezogen auf den trockenen Celluloseether.

Der feuchten Alkylhydroxyalkylcellulose (AHAC) können neben dem Vernetzungsmittel und Wasser weitere Additive oder Modifikatoren oder weiteres Wasser zugegeben werden. Die feuchte Alkylhydroxyalkylcellulose (AHAC) kann beispielsweise mechanisch verdichtet oder gekühlt werden.

Die Zugabe des Vernetzungsmittels und des Lösungsmittels kann z.B. in einem handelsüblichen Mischer oder in einer Förderschnecke durchgeführt werden.

Das Vernetzungsmittel geht eine in wässriger Lösung reversible Bindung mit den Hydroxylgruppen der Cellulose ein. Bevorzugt werden Dialdehyde und Siliciumorganische Verbindungen nach dem Stand der Technik eingesetzt, wie sie beispielsweise in den folgenden Patentschriften beschrieben sind: US 2 879 268, EP-B 1 316 563 und EP 1 452 544 bzw. JP08183801 und DE 32 32 467.

So können beispielsweise verwendet werden:
a) Dialdehyde mit 2-8 C-Atomen wie beispielsweise Glyoxal. Glyoxal wird bevorzugt in Form einer handelsüblichen wässrigen Lösung von etwa 40 Gew.-% eingesetzt.
b) Monoaldehyde mir 1-8 C-Atomen, welche Vollacetalbindungen eingehen können, beispielsweise Formaldehyd.
c) Siliziumverbindungen der Formel Si(R1)(R2)R3)(R4), wobei die Reste R1-4 unabhängig voneinander Aryloxy-, Alkoxy-, Acyloxy-, Aryl,- Alkyl-, Alkenyl, N-Silyl oder O-Silyl bedeuten. Die Reste können gegebenenfalls substituiert sein, wobei für die O- bzw- N-Silylreste die Substituenten Rn wiederum unabhängig voneinander Aryloxy-, Alkoxy-, Acyloxy-, Aryl,- Alkyl-, Alkenyl, N-Silyl oder O-Silyl bedeuten.
   i) Bevorzugt sind solche Verbindungen, bei denen mindestens 2 der 4 Substituenten gegebenenfalls substituierte Alkoxy- oder Acyloxy-Gruppen sind und 0-2 Substituenten gegebenenfalls substituierte Alkylgruppen mit 1-2 C-Atomen sind. Beispiele für bevorzugte Verbindungen sind:
      - Ethyl-triacetoxysilan
      - Methyl-triacetoxysilan
      - Methyl-trimethyoxysilan
      - Tetraacetoxysilan
   ii) Weiterhin bevorzugt sind solche polymeren Siloxane, welche in der Polymerkette mindestens 2 gegebenenfalls substituierte Alkoxy- oder Acyloxy-Substituenten aufweisen. Beispiele für solche Verbindungen sind:
      R1=CH₃, R2=R3 = OCH₃, R4=OSi(OCH₃)₂CH₃: H₃C(OCH₃)₂Si-O-Si(OCH₃)₂CH₃
      H3C- Si(CH3)(OC2H5)-[Si(CH3)(OC2H5)]n-CH3
      H3C- Si(CH3)(OOC2H3)-[Si(CH3)(OOC2H3)]n-CH3.
   d) Mischformen von Vernetzern, welche sowohl mindestens eine Aldehyd- oder Carbonylgruppe als auch mindestens eine Gruppe der Formel -Si(R1)(R2)(R3) enthalten, wobei die Reste R1-R3 unabhängig voneinander Aryloxy-, Alkoxy-, Acyloxy-, Aryl,- Alkyl-, Alkenyl, N-Silyl oder O-Silyl bedeuten. Die Reste können gegebenenfalls substituiert sein, wobei für die O- bzw- N-Silylreste die Substituenten Rn wiederum unabhängig voneinander Aryloxy-, Alkoxy-, Acyloxy-, Aryl,- Alkyl-, Alkenyl, N-Silyl oder O-Silyl bedeuten. Mindestens einer der Reste Rn ist in diesem Fall ein Aryloxy-, Alkoxy-, oder Acyloxy-Rest. Beispiele für eine solche Verbindungen ist: HC(O)CH₂Si(OCH₃)₃.
   e) Vernetzer mit mindestens einer reversibel bindenden Einheit ausgewählt aus der Gruppe der Aldehyd, -Carbonyl und Silane -Si(R1)(R2)(R3) und mindestens einer stärker bindenden Einheit aus der Gruppe der Epoxide, Alkylester, Säurechloride, Alkylchloride, Alkylbromide, Alkyliodide. Dabei bedeuten die Reste R1-R3 unabhängig voneinander Aryloxy-, Alkoxy-, Acyloxy-, Aryl,- Alkyl-, Alkenyl, N-Silyl oder O-Silyl bedeuten. Die Reste können gegebenenfalls substituiert sein, wobei für die O- bzw- N-Silylreste die Substituenten Rn wiederum unabhängig voneinander Aryloxy-, Alkoxy-, Acyloxy-, Aryl,- Alkyl-, Alkenyl, N-Silyl oder O-Silyl bedeuten. Mindestens einer der Reste Rn ist in diesem Fall ein Aryloxy-, Alkoxy-, oder Acyloxy-Rest. Beispiele für solche Verbindungen ist Glycidyloxypropyltrimethoxysilan (GPTMS) CH₂(O)CHCH₂OCH₂CH₂CH₂Si(OCH₃)₃.

Besonders bevorzugt wird Glyoxal verwendet.

Verfahren zur Mahlung und Trocknung von Celluloseethern sind bekannt, beispielsweise aus der Lehre der GB 2 262 527, DE 38 39 831, EP 1 127 910 und EP 1 127 895. Zum Einsatz können verschiedene Mühlentypen kommen, beispielsweise Stift-, Schüssel-, Hammer-, Siebkorb-, Schlagkreuz- und Prallmühlen. Die Trocknungswirkung wird bevorzugt durch die Verwendung von auf Temperaturen von > 80 °C, bevorzugt > 100 °C erhitzter Gase oder Gasgemische in der Zerkleinerungsvorrichtung unterstützt. An die Mahltrocknung können sich weitere Mahl- und / oder Trocknungsschritte anschließen. Bevorzugt ist die Mahlung jedoch einstufig und als Mühle wird eine sieblose Hochdrehzahl-Prallmühle verwendet.

Im Anschluss an die Mahlung und Trocknung, welche bevorzugt gleichzeitig in Form einer Maltrocknung durchgeführt wird, haben die Alkylhydroxyalkylcellulosen (AHAC) einen Restfeuchtegehalt von 0,1 bis 15 Gew.-%, bevorzugt 1 bis 10 Gew.-%, besonders bevorzugt 1,5 bis 7 Gew.-%, gemessen als Trocknungsverlust bei 105 °C nach 20 h und bezogen auf die Einwaage des getrockneten und zerkleinerten Celluloseethers.

Ein weiterer Gegenstand der vorliegenden Erfindung sind die nach dem erfindungsgemäßen Verfahren erhältlichen Alkylhydroxyalkylcellulosen (AHAC).

Die erfindungsgemäßen Alkylhydroxyalkylcellulosen (AHAC) weisen bevorzugt folgende Sieblinie auf:

| Siebdurchgang | Prozent |
|---|---|
| < 315 µm | 95 bis 100 |
| < 250 µm | 90 bis 100 |
| < 200 µm | 80 bis 100 |
| < 160 µm | 70 bis 99,9 |
| < 125 µm | 50 bis 95 |
| < 100 µm | 30 bis 90 |
| < 63 µm | 10 bis 70 |

Die Viskosität der erfindungsgemäß erhältlichen Produkte, gemessen als Lösung in Wasser von 2 Gew.-% bei 23°C mit einem Haake Rotovisko bei 2,55 s⁻¹, beträgt bevorzugt 10 bis 200000 mPa*s, besonders bevorzugt 100 bis 150000 mPa*s und ganz besonders bevorzugt etwa 1000 bis 100000 mPa*s, insbesondere 10000 bis 80000 mPa*s.

Das Schüttgewicht der Produkte, gemessen an einer losen Schüttung beträgt bevorzugt 200 bis 700 g/l, besonders bevorzugt 250 bis 650 g/l und ganz besonders bevorzugt 300 bis 600 g/l.

Die erfindungsgemäßen Alkylhydroxyalkylcellulosen (AHAC) zeichnen sich gerade dadurch aus, dass sie, verglichen mit anderen Alkylhydroxyalkylcellulosen (AHAC) des Standes der Technik, zu einer besonders geringen Bildung von Knollen in Gipsmaschinenputzen führen. Zum Beispiel wird gemäß der WO99/64368 eine bereits getrocknete MHAC mit einer polymeren Säure beschichtet und anschließend getrocknet. Zweimal trocknen ist jedoch apparativ und energetisch sehr aufwändig. Desweiteren kann die Zugabe von Säure zu einem Viskositätsabbau führen.

Neben den Vorteilen, die das erfindungsgemäße Herstellungsverfahren betreffen, ergeben sich auch Verbesserungen für die erfindungsgemäßen AHAC selbst. So kommt es bei dem Verfahren gemäß der vorliegenden Erfindung zu einer gleichmäßigeren Verteilung des Vernetzungsmittels auf der AHAC im Gegensatz zu Verfahren nach dem Stand der Technik, bei denen das Vernetzungsmittel auf den getrockneten Cellusloseether gegeben und anschließend untergemischt wird. Die Verhinderung von Klumpenbildung beim Anrühren behandelter AHAC ist bei den erfindungsgemäßen AHAC verbessert.

Ein weiterer Gegenstand der vorliegenden Erfindung ist daher auch die Verwendung der erfindungsgemäßen Alkylhydroxyalkylcellulosen (AHAC) in gipsabbindenden Baustoffsystemen, bevorzugt in gipsabbindenden Putzen und Spachtelmassen, besonders bevorzugt in Gipsmaschinenputz.

Die behandelte Alkylhydroxyalkylcellulosen (AHAC) wird typischerweise in Mengen von 0,01 bis 5 Gew.-%, bevorzugt 0,1 bis 0,8 Gew.-% und besonders bevorzugt 0,2 bis 0,4 Gew.-% eingesetzt, jeweils bezogen auf die Trockenmasse des Baustoffsystems.

Neben dem erfindungsgemäßen Celluloseether und Gips kann die Trockenmasse des Baustoffsystems (die Gipsmischung) beispielsweise aus folgenden üblichen Inhaltsstoffen bestehen, ohne jedoch auf diese beschränkt zu sein:
- Kalkhydrat 0 - 30 Gew.-%
- Mineralische Zuschlagstoffe
   (z.B. Quarzsand, Kalksteinsand, -gries, -mehl, Glimmer) 0 - 30 Gew.-%
- Leichtzuschlag
   (z.B. Perlite) 0 - 20 Gew.-%
- Kunststoffdispersionspulver 0 - 20 Gew.-%
- Fasern
   (z.B. Cellulosefasern) 0 - 2 Gew.-%
- Beschleuniger 0 - 0,8 Gew.-%
- Zusatzverdicker
   (z.B. Stärke- und Guarderivate, synthetische Verdicker, Polyacrylamid, Polyvinylalkohol) 0 - 0,5 Gew.-%
- Verzögerer 0 - 0,5 Gew.-%
- Luftporenbildner 0 - 0,1 Gew.-%

Das Wasser/Feststoffverhältnis in den erfindungsgemäßen gipsabbindenden Baustoffsystemen beträgt bevorzugt 0,2 bis 0,9, besonders bevorzugt 0,4 bis 0,8.

Dem Fachmann ist bekannt, dass Alkylhydroxyalkylcellulose (AHAC) üblicherweise nicht allein, sondern mit einer Reihe von Zuschlagstoffen und/oder Modifizierungsmitteln in den Formulierungen eingesetzt werden kann. So können z.B. in Baustoffgrundmischungen Verwendung finden Methylhydroxypropylcellulosen abgemischt mit geringen Mengen, an Hilfs- und Zuschlagstoffen z.B. Entschäumern, Quellmitteln, Füllstoffen, Leichtzuschlagstoffen, Polyacrylaten, Polyacrylamiden, Luftporenbildnern, Dispergierhilfsmitteln, Hydrophobierungsmitteln, Verflüssigern, Superabsorbern, Stabilisatoren und synthetischen, teilsynthetischen sowie natürlichen Verdickern.

### Beispiele

Sofern nicht abweichend vermerkt, beziehen sich alle Prozentangaben auf das Gewicht.

### Beispiel 1:

Eine gemahlene und getrocknete Methylhydroxyethylcellulose (MHEC) mit einem DS (Methyl) von 1,58 und einem MS(Hydroxyethyl) von 0,30 wurde mit Glyoxal behandelt. Dazu wurde der Celluloseether in der 10-fachen Menge Aceton suspendiert und mit einer 40 Gew.-%igen wässrigen Glyoxallösung versetzt. Das Suspensionsmittel wurde verdampft. In den Produkten wurde ein Glyoxalgehalt von 0,03, 0,11 bzw. 0,24 Gew.-% analysiert, bezogen auf den trockenen Celluloseether. Die Produkte wurden im Form von Pulvern erhalten, die vom Ausgangsmaterial augenscheinlich nicht zu unterscheiden waren.

| MHEC, Ausgangsmaterial | Vergleich 1 (V1) |
|---|---|
| DS (Methyl) | 1,58 |
| MS(Hydroxyethyl) | 0,30 |
| Viskosität in mPa*s | 47.000 mPa*s |
| Feuchte in % | 2,7 % |
| NaCl-Gehalt | 2,3 % |
| Schüttgewicht | 400 g/l |
| Siebdurchgang < 0,315 mm | 100 % |
| Siebdurchgang < 0,200 mm | 99,8 % |
| Siebdurchgang < 0,063 mm | 44,6 % |

### Beispiel 2:

Die mit Glyoxal behandelten Muster E1 bis E3 aus Beispiel 1 wurden in einem Gipsspachtel geprüft. Als Vergleichssubstanz diente das nicht mit Glyoxal behandelte Ausgangsmaterial V1.

Eine Gipsspachtel-Trockenmischung, enthaltend 0,48 Gew.-% Celluloseether, wird in Wasser eingestreut (Wasser-Feststoff-Faktor 0,6) und nach 8 Minuten Reifezeit 1 Minute lang per Hand mit einer Kelle gerührt. Nach weiteren 10 Minuten Reifezeit wird die Mischung aufgerührt (15 min) und mittels eines Spachtels auf eine Gipskartonplatte aufgezogen. Dabei zeigten sich auffällige Unterschiede bei der Klumpenbildung und beim Andickverhalten. Während alle erfindungsgemäßen Muster eine sehr geringe Klumpenbildung zeigten, zeigten diese Muster mit zunehmender Glyoxalmenge einen schleichende Verdickung. Diese unerwartete geringe Verdickung beim Aufrühren nach 8 Minuten kann den Verarbeiter dazu verleiten, mehr von der Gipsspachtel-Trockenmischung einzusetzen und damit einen zu hohen Wasser-Feststoff-Faktor einzustellen.

| MHEC, Bezeichnung | V1 | E1 | E2 | E3 |
|---|---|---|---|---|
| Glyoxal, Gew.-% | 0 | 0,03 | 0,11 | 0,24 |
| Klumpen beim Anrühren nach 8 min | viele | keine | keine | keine |
| Andickverhalten beim Anrühren nach 8 min | 100 | 100 | 95 gering niedriger | 90 etwas niedriger |
| Klumpen nach Aufziehen | 5 mittelgroße | keine | keine | keine |

### Beispiel 3 (Verfahren)

Ein wasserfeuchter Filterkuchen einer Methylhydroxyethylcellulose (MHEC, DS (Methyl) = 1,55, MS(Hydroxyethyl) = 0,28, NaCl = 3,4 % bezogen auf den trockenen Celluloseether), mit einem Wassergehalt von 57 % (bezogen auf die Gesamtmasse des Filterkuchens) wird mit Wasser auf einen Wassergehalt von 62 % (bezogen auf die Gesamtmasse des Filterkuchens) angefeuchtet. Das Wasser zur Anfeuchtung des Filterkuchens enthält verschiedene Mengen Glyoxal sowie eine Konstante Menge eines Puffergemisches. Das Puffergemisch besteht aus Natriumdihydrogenphosphat und Dinatriumhydrogenphosphat im Molverhältnis 1:1. Die Anfeuchtung wird in einem mit Pflugschar-Mischern ausgestatteten Horizontalmischer mit einem Fassungsvermögen von 400 I bei einer Batchgröße von 80 kg des wasserfeuchten Filterkuchens durchgeführt. Es werden dazu das Glyoxal und das Phosphatpuffersystem in 10,53 kg Wasser gelöst und zu 34,4 kg MHEC (berechnet als Trockenmasse) gegeben. Die Vermischung erfolgte bei Raumtemperatur.

Das so hergestellte Produkt wurde anschließend einer Mahltrocknung in einer sieblosen Prallmühle gemäß EP 1 127 910 unterworfen.

| Endprodukt | V2 | E4 | E5 | E6 |
|---|---|---|---|---|
| Glyoxal in % | 0,00 | 0,05 | 0,10 | 0,20 |
| NaCl in % | 3,4 | | | |
| Produktfeuchte in % | 2,71 | 2,28 | 2,45 | 2,61 |
| Schüttgewicht in g/L | 243 | 240 | 239 | 232 |
| Sieblinie | | | | |
| <315 µm in % | 100,00 | 100,00 | 100,00 | 100,00 |
| <250 µm in % | 100,00 | 100,00 | 100,00 | 100,00 |
| <200 µm in % | 98,40 | 98,39 | 98,27 | 98,67 |
| <160 µm in % | 90,74 | 90,12 | 91,04 | 91,14 |
| <125 µm in % | 77,89 | 76,82 | 78,35 | 78,57 |
| <100 µm in % | 65,88 | 64,81 | 66,83 | 67,34 |
| < 63 µm in % | 37,63 | 37,24 | 39,92 | 40,03 |
| Viskosität in mPa*s | 18.950 | 19.250 | 19.610 | 19.360 |

Die MHEC aus den Versuchen E4 bis E6 zeigten eine verminderte Klumpenbildung in einem Gipsspachtel, welcher analog Beispiel 2 angerührt wurde. Bei der Verwendung des nicht glyoxalbehandelten Musters V2 wurde Klumpenbildung beobachtet.

## Patentansprüche

1. Zusammensetzung für ein gipsabbindendes Baustoffsystem, wobei neben den üblichen Inhaltsstoffen einer Gipsmischung, eine mit einem Vernetzungsmittel behandelte Alkylhydroxyalkylcellulose (AHAC) enthalten ist.

2. Zusammensetzung nach Anspruch 1, wobei die AHAC mit 0,005 bis 1 Gew.-%, bevorzugt mit 0,01 bis 0,3 Gew.-%, besonders bevorzugt mit 0,02 bis 0,2 Gew.-% des Vernetzungsmittels berechnet als wasser- und lösungsmittelfreie Substanz und bezogen auf die trockene AHAC behandelt wurde.

3. Zusammensetzung nach Anspruch 1 oder 2, wobei die AHAC eine Methylhydroxyethylcellulose (MHEC), eine Ethylhydroxyethylcellulose (EHEC), eine Methylhydroxypropylcellulose (MHPC), eine Methylethylhydroxyethylcellulose (MEHEC), eine Methylhydroxyethylhydroxypropylcellulose (MHEHPC) oder eine Mischung dieser Celluloseether ist.

4. Zusammensetzung nach einem der vorherigen Ansprüche, wobei die AHAC einen DS (Alkyl) von 0,8 bis 2,0, bevorzugt von 1,3 bis 1,8, aufweist.

5. Zusammensetzung nach einem der vorherigen Ansprüche, wobei die AHAC einen MS (Hydroxyalkyl) von 0,1 bis 1,2, bevorzugt 0,15 bis 0,8, besonders bevorzugt 0,2 bis 0,6, aufweist.

6. Zusammensetzung nach einem der vorherigen Ansprüche, wobei das Vernetzungsmittel ausgewählt wird aus der Gruppe, die Monoaldehyde, Dialdehyde, Siliziumverbindungen der Formel Si(R1)(R2)R3)(R4) und Aldehyd- oder Carbonylgruppen enthaltende Siliziumverbindungen umfasst oder Mischungen davon, wobei Glyoxal als Vernetzungsmittel bevorzugt ist.

7. Zusammensetzung nach einem der vorherigen Ansprüche, wobei die behandelte AHAC in einer Mengen von 0,01 bis 5 Gew.-%, bevorzugt 0,1 bis 0,8 Gew.-% und besonders bevorzugt 0,2 bis 0,4 Gew.-% bezogen auf die Gesamtmasse der Zusammensetzung enthalten ist.

8. Zusammensetzung nach einem der vorherigen Ansprüche, wobei zusätzlich Wasser enthalten ist unter Bildung eines gipsabbindenden Baustoffsystems.

9. Gipsabbindendes Baustoffsystem nach Anspruch 8, wobei das Wasser/Feststoff-Verhältnis 0,2 bis 0,9, bevorzugt 0,4 bis 0,8 beträgt.

10. Ein gipsgebundenes Baustoffsystem auf Basis der Zusammensetzung nach Anspruch 8 oder 9.

11. Verfahren zur Herstellung einer mit einem Vernetzungsmittel behandelten Alkylhydroxyalkylcellulose (AHAC), wobei
a) zu einer feuchten AHAC 0,005 bis 1 Gew.-%, bevorzugt 0,01 bis 0,3 Gew.-%, besonders bevorzugt 0,02 bis 0,2 Gew.-% ein Vernetzungsmittel, berechnet als wasser- und lösungsmittelfreie Substanz und bezogen auf die trockene AHAC, zugegeben, und
b) die so behandelte AHAC anschließend getrocknet und gemahlen wird, **dadurch gekennzeichnet, dass** in Schritt a) zusammen mit dem Vernetzungsmittel 3 bis 100 Gew.-%, bevorzugt 5 bis 80 Gew.-%, besonders bevorzugt 10 bis 50 Gew.-% Wasser bezogen auf die trockene AHAC zugegeben werden.

12. Verfahren nach Anspruch 11, wobei die AHAC eine MHEC, eine EHEC, eine MHPC, eine MEHEC, eine MHEHPC oder eine Mischung dieser Cellulosen ist.

13. Verfahren nach einem der Ansprüche 11 oder 12, wobei die AHAC einen DS (Alkyl) von 0,8 bis 2,0, bevorzugt von 1,3 bis 1,8, aufweist.

14. Verfahren nach einem der Ansprüche 11 bis 13, wobei die AHAC einen MS (Hydroxyalkyl) von 0,1 bis 1,2, bevorzugt 0,15 bis 0,8, besonders bevorzugt 0,2 bis 0,6, aufweist.

15. Verfahren nach einem der Ansprüche 11 bis 14, wobei das Vernetzungsmittel ausgewählt wird aus der Gruppe, die Monoaldehyde, Dialdehyde, Siliziumverbindungen der Formel Si(R1)(R2)R3)(R4) und Aldehyd- oder Carbonylgruppen enthaltende Siliziumverbindungen umfasst oder Mischungen davon, wobei Glyoxal als Vernetzungsmittel bevorzugt ist.

16. Eine Alkylhydroxyalkylcellulose erhältlich durch das Verfahren nach einem der Ansprüche 11 bis 15.

17. Eine Alkylhydroxyalkylcellulose, vorzugsweise erhältlich durch das Verfahren nach einem der Ansprüche 11 bis 15, welche mit 0,005 bis 1, bevorzugt 0,01 bis 0,3 und besonders bevorzugt 0,02 bis 0,2 Gew.-% eines Vernetzungsmittels, berechnet als wasser- und lösungsmittelfreie Substanz und bezogen auf die trockene AHAC, behandelt wurde und zu mehr als 95 Gew.-% ein Sieb mit einer Maschenweite von 315 µm passiert.

18. Verwendung einer AHAC nach Anspruch 16 oder 17 zur Herstellung von Zusammensetzungen für gipsabbindende Baustoffsysteme.
